# EUROPEAN PATENT SPECIFICATION

(11) **EP 2 962 577 B1**
(45) Date of publication and mention of the grant of the patent: **11.10.2017**
(21) Application number: 14185859.7
(22) Date of filing: 22.09.2014
(51) Int. Cl.: A01K 15/02, A23K 40/00, A23K 40/30, A23K 10/26, A23K 20/28, A23K 50/40

(54) **Pet chew product with interior treat**
Haustierkauprodukt mit Leckerbissen im Innern
Produit à mâcher pour animal de compagnie contenant une friandise

(30) Priority: 30.06.2014 US 201462018905 P
(43) Date of publication of application: 06.01.2016
(73) Proprietor: Beefeaters Holding Company, Inc., North Bergen, NJ 07047 (US)
(72) Inventor: Spring, Timothy J., Princeton, NJ 08540 (US)
(74) Representative: Games, Robert Harland

(56) References cited:
- US-A1- 2002 073 927
- US-A1- 2008 141 948
- US-A1- 2012 240 866
- US-A1- 2013 104 810
- US-A1- 2013 149 418
- US-B1- 6 289 846

## Description

### FIELD

The present disclosure relates to a pet chew product and, more specifically, to a dog chew product having an interior cavity for retaining an edible treat.

### BACKGROUND

Dog chews formed from a hide of an animal, such as rawhide or pig hide, are well known in the art. Such pet chews provide a means for an animal to satisfy an instinctual urge to chew on an object, which may also aid in preventing the animal from chewing on undesirable household items. The dog chews formed from hide are also rather tough and durable, allowing the pet chews to withstand extended periods of chewing from an animal. Dog chews have also been found to be beneficial in slowing dental disease in animals such as dogs due to the abrasive action of the dog chew on the animal's teeth during play with the pet chew.

One disadvantage of simple dog chews formed from a hide, such as a traditional rawhide bone, is that the animal may lose interest in the pet chew rather quickly. Such pet chews often lack the entertainment value to keep a dog occupied and engaged for long periods of time due to the simple design of the pet chew and a lack of features that could motivate the animal to continue playing with the dog chew.

It is also known in the art to provide a dog toy where an edible treat is disposed within an opening in the dog toy such that an animal playing with the pet toy may spend considerable amounts of time trying to access the edible treat. One disadvantage of these dog toys is that the container having the opening is often formed from an inedible material such as plastic, causing the animal to lose interest in the dog toy once the edible treat has been removed. Such dog toys also tend to rely on the animal removing the edible treat out of the opening through use of the animal's tongue, which provides a limited dental benefit to the animal when interacting with the pet toy. US20130104810 discloses a hollow edible toy made of dough and containing a treat. US6289846 discloses a hollow edible toy made of two connectable parts and containing a treat. US20120240866 discloses a reusable hollow toy made of two connectable parts joined by an edible lace.

There is a continuing need for a dog chew formed from an edible material that a pet finds entertaining for many hours of play. Desirably, the pet chew product also provides a dental benefit for the pet.

### SUMMARY

In concordance with the instant disclosure, a pet chew product that entertains a pet, provides a motivation for the pet to interact with the pet chew product, and provides a dental benefit to the pet, has been surprisingly discovered.

A pet chew product as defined in claim 1 includes an edible casing having a hollow cavity with an edible treat disposed therein. The casing has a first casing segment and a second casing segment, which are joined at peripheral edges to form the casing and define the cavity. The casing has an opening that militates against a removal of the edible treat from the cavity until the opening or the casing is opened further by a pet. The opening permits an olfactory detection and visual detection of the edible treat by the pet. An open volume of the cavity is greater than a size of the edible treat, and allows the edible treat to strike an inner surface of the cavity when the casing is manipulated by the pet. The striking of the edible treat with the inner surface of the cavity permits an audible detection of the edible treat by the pet.

A method of producing the pet chew product as defined in claim 8 includes the step of providing a first casing segment and a second casing segment, each of the first casing segment and the second casing segment having a peripheral edge. An edible treat is then disposed between the first casing segment and the second casing segment. The peripheral edges of the first casing segment and the second casing segment are then connected to form the edible casing having a hollow cavity with the edible treat disposed therein.

The first casing segment and the second casing segment are joined by at least one lace, for example, disposed through holes adjacent to the peripheral edges of the first and second casing segments. Tassels having a plurality of strands are also attached to the casing, for example, at the peripheral edges. The tassels may be the same as or different from at least one lace. Each of the at least one lace and the tassels may also be edible materials such as rawhide or pig hide, as nonlimiting examples.

In an exemplary embodiment, the pet chew product has two sides formed from rawhide. The rawhide sides are stitched together at their edges with thin rawhide strips, and define an interior cavity. The rawhide strips used to stitch the sides together can also form outwardly extending tassels, which facilitate a cleaning of the pet's teeth. The interior cavity has an edible insert disposed therein, which creates an audible noise when the product is shaken. The pet can also view and smell the edible insert through a primary window formed in at least one of the rawhide sides. Secondary windows may also be used. Both the primary and secondary windows are smaller in overall size that the edible insert, to make it difficult for the pet to remove the edible insert from the product. The edible insert may have a preselected flavor such as liver, bacon, chicken, peanut butter and dental. The edible insert may include a granular/abrasive additive (e.g., silica) and/or a breath freshener additive (e.g., mint).

### DRAWINGS

The above, as well as other advantages of the present disclosure, will become readily apparent to those skilled in the art from the following detailed description, particularly when considered in the light of the drawings described herein.
FIG. 1 is a top perspective view of a pet chew product according to one embodiment of the present disclosure, the pet chew product shown having an overall star-shape for purposes of illustrating the invention, it being understood that the pet chew product may also have other shapes as further described herein
FIG. 2 is a top plan view of the pet chew product illustrated in FIG. 1;
FIG. 3 is a side elevational view of the pet chew product illustrated in FIG. 1, showing a lacing together of a first casing segment with a second casing segment;
FIG. 4 is another side elevational view of the pet chew product illustrated in FIG. 1, showing an end view of tassels attached at an intersection of a first casing segment and a second casing segment and extending outwardly from the same;
FIG. 5 is an exploded top perspective view of the pet chew product illustrated in FIG. 1, the pet chew product shown without laces and depicting an interior treat of the pet chew product;
FIG. 6 is a cross-sectional side elevational view taken along section line A--A in FIG. 2, showing a spacing between the interior treat and an inner wall of the pet chew product;
FIG. 7 is a top plan view of a pet chew product according to another embodiment of the present disclosure, the pet chew product having an overall disk- or sun-shape;
FIG. 8 is a top plan view of a pet chew product according to a further embodiment of the present disclosure, the pet chew product having an overall crescent- or moon-shape;
FIG. 9 is a top plan view of a pet chew product according to yet another embodiment of the present disclosure, the pet chew product having an overall heart-shape; and
FIG. 10 is a top plan view of a pet chew product according to an additional embodiment of the present disclosure, the pet chew product having an overall donkey-shape.

### DETAILED DESCRIPTION

The following description is merely exemplary in nature and is not intended to limit the present disclosure, application, or uses. It should also be understood that throughout the drawings, corresponding reference numerals indicate like or corresponding parts and features. In respect of the methods disclosed, the steps presented are exemplary in nature, and thus, are not necessary or critical.

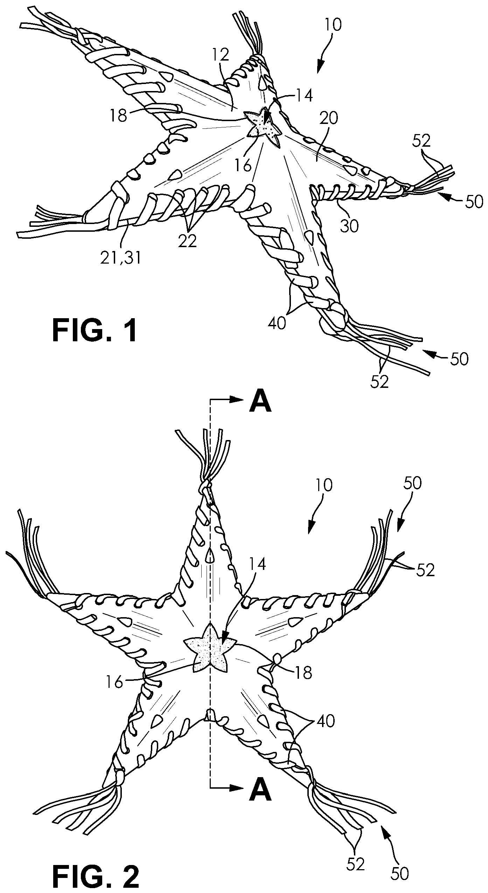

FIGS. 1-6 illustrate a pet chew product 10 according to one embodiment of the disclosure. Although use of the pet chew product 10 by dogs is primarily referenced throughout the following description, it should be understood that other types of pets may also enjoy and use the pet chew product 10, and that the use of the pet chew product 10 of the disclosure is not limited to just dogs.

The pet chew product 10 includes an edible and hollow casing 12, which defines an interior cavity 14. An edible treat 16 is disposed within the interior cavity 14. The hollow casing 12 also has at least one opening 18. The at least one opening 18 provides visual and olfactory access to the cavity 14, which permits a dog to view and smell the treat 16 within the interior cavity 16 without easily permitting the dog to remove the treat 16 from the interior cavity 14. An open volume of the cavity 14 is also greater than a size of the treat 16, which permits the treat 16 to move within the cavity 14 and impact or strike the inner surface of the casing 12 when the pet chew product 10 is manipulated (e.g., shaken or moved) by the dog. This permits an auditory detection of the treat 16, in addition to the visual and olfactory detection provided by the at least one opening 18. Advantageously, the pet chew product 10 having these features has been found to be especially entertaining for dogs.

In a particular embodiment, the hollow casing 12 of the pet chew product 10 has a first casing segment 20 and a second casing segment 30. It should be appreciated that the first casing segment 20 and the second casing segment 30 may be provided as separate pieces, or may be different portions of a single unitary piece that is folded upon itself to form the body of the pet chew product 10, as desired. Pet chew products 10 having more than two segments are also contemplated, and are considered to be within the scope of the present disclosure.

Each of the first casing segment 20 and the second casing segment 30 may be formed from an edible material having sufficient rigidity to maintain its form and durability to withstand extended chewing from a dog. The edible material may be a form of animal hide such as rawhide or pig hide, as non-limiting examples. The edible material may also have a natural or artificial flavor added thereto, as desired, including the addition of beef, chicken, peanut butter, or other flavoring. However, any form of edible material having the desired characteristics, while remaining safe for dog consumption, may be used without departing from the scope of the disclosure.

It should also be understood that the first casing segment 20 and the second casing segment 30 may be formed from the same material or may be formed from two different materials, as desired. One of ordinary skill in the art should appreciate that the first casing segment 20 and the second casing segment 30 may also have a flavored and/or colorized coating or shell. The flavored and/or colorized coating or shell of the first casing segment 20 and/or the second casing segment 30 may be selected by a skilled artisan to further contribute to the enjoyment of the pet chew product 10 by the dog, as desired.

The pet chew product 10 is primarily described herein as having laces 40 which connect the first casing segment 20 and the second casing segment 40. However, it should further be understood that the edges of the segments forming the pet chew product 10 may also be connected or sealed in alternative ways within the scope of the present disclosure. As nonlimiting examples, the edges of the casing segments 20, 30 may be connected or sealed through the use of heat sealing, compression sealing, twist ties, or adhesives. Where adhesives are employed, the adhesives may be an edible form of adhesive suitable for use in dog products. Other suitable means for connecting or sealing the peripheral edges of the pet chew product 10 may also be used, as desired.

In one embodiment, where the first case segment 20 and the second casing segment 30 are laced together, the first casing segment 20 has a first perimeter 21 and the second casing segment 30 has a second perimeter 31. A plurality of first apertures 22 are formed in the first casing segment 20 adjacent the first perimeter 21. A plurality of second apertures 32 are formed in the second casing segment 30 adjacent the second perimeter 31. The first apertures 22 may be formed about an entirety or only a portion of the first perimeter 21, and the second apertures 32 may be formed about an entirety or only a portion of the second perimeter 31, as desired.

The first apertures 22 and the second apertures 32 may have a shape and size suitable for receiving at least one lace 40 therethrough. Each of the laces 40 are elongated and may have a length that is many orders of magnitude greater than a width thereof. Each of the laces 40 may be formed from the same material as either of the first casing segment 20 and the second casing segment 30, or may be formed from a different material, as desired. The laces 40 are at least one of chewable and edible. The laces 40 may for instance be formed from a hide material, such as rawhide, as a non-limiting example. The material forming the laces 40 may also have flavoring added, as desired.

As shown in FIGS. 1-4 and 6, the laces 40 are fed through the first apertures 22 and the second apertures 32 to couple the first casing segment 20 to the second casing segment 30. Accordingly, the laces 40 may be fed through one of the first apertures 22 formed in the first casing segment 20 before then being fed through an adjacent one of the second apertures 32 formed in the second casing segment 30. This process is repeated until the first casing segment 20 is coupled to the second casing segment 30 about at least a portion of the perimeter 21, 31 of each respective casing segment 20, 30. The lacing causes the first and second casing segments 20, 30 to not easily be pulled apart when being manipulated by a dog.

It should be understood that various different patterns of the first apertures 22 and the second apertures 32 may be used, which can result in various different paths for the laces 40 to be fed therethrough. This includes situations where multiple laces 40 are fed through a single one of the apertures 22, 32, or where a single one of the laces 40 is fed through the same one of the apertures 22, 32 multiple times, as particular non-limiting examples. The lacing process may also vary from the sequential order described hereinabove. It should also be appreciated that different thicknesses for the laces 40 may also be selected by a skilled artisan within the scope of the present disclosure.

It should be understood that the lacing of the pet chew product 10 permits the dog to ultimately tear apart the pet chew product 10 in use, while still providing for a desirable sustained period of enjoyment. In other words, the laces 40 may become unlaced through chewing by the dog, which permits the tearing apart of the pet chew product 10. It is believed that this operation is a source of enjoyment for the dog using the pet chew product 10.

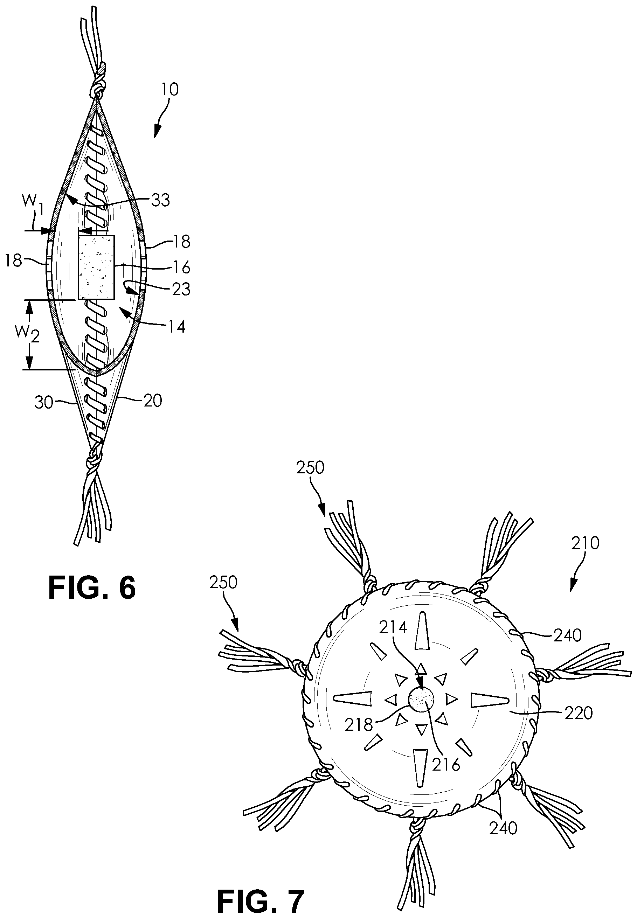

As best shown in FIG. 6, the cavity 14 of the pet chew product 10 may be defined by a cooperation of an inner surface 23 of the first casing segment 20 and an inner surface 33 of the second casing segment 30. A portion of the first casing segment 20 formed within the first perimeter 21 may be raised with respect to the first perimeter 21, and a portion of the second casing segment 30 formed within the second perimeter 31 may be raised with respect to the second perimeter 31, in order to space the interior surface of the first casing segment 20 from the interior surface of the second casing segment 30. The inner surfaces 23, 33 of the first casing segment 20 and the second casing segment 30 may be substantially concave, for example. The inner open volume of the cavity 14 may thereby be adjusted by the skilled artisan, changing the shapes of the first casing segment 20 and the second casing segment 30 to account for treats 16 of different sizes, as desired.

The at least one treat 16 of the present disclosure may be formed from any suitable edible material. In some embodiments, it may be preferable for the treat 16 to be formed from an edible material that does not easily break or crumble, for example, a non-powdery material such as jerky, when the pet chew product 10 is being used by a dog. In other embodiments, the treat 16 may be formed from a crunchy material such as a rice- or corn-based puff. It should be appreciated that where the edible material does not easily break or crumble, an impacting of the treat 16 against the casing 12 when manipulated by the dog will not cause a degradation of the treat 16.

In another embodiment, the treat 16 is formed from ingredients that may be powder-like or friable, for example, freeze dried chicken liver. It should be appreciated that a friable edible material may result in a degradation and eventual release of the treat 16 from the cavity 14 after the treat 16 contacts the casing 12 when the pet chew product 10 is being used by the dog.

The treat 16 may be formed from a variety of different food products, including chicken, beef, pork, and turkey as non-limiting examples. The treat 16 may have naturally occurring or artificial flavoring added thereto, including flavors such as liver, bacon, chicken, and peanut butter, as non-limiting examples. The treat 16 may also have a color additive, or have an edible colored coating, which is visually apparent to the dog and is different from a color of the casing 12, so as to facilitate the visual detection of the treat 16 by the dog.

At least one of the treats 16 is sized so as to not drop through the opening 14 in the pet chew product 10, until after the opening has been enlarged due to use, for example, chewing by the dog. For example, the treat 16 may have an average diameter that is greater than an average diameter of the opening 14 in the pet chew product 10. In another example, the opening 14 and the treat 16 may have relative shapes that makes it difficult for treat 16 to fall through the opening 14 without enlargement of the opening 14 through use by the dog.

It should be appreciated that multiple treats 16 may also be used. The multiple treats 16 can have different flavoring, for example, to further entice the dog to engage with the pet chew product 10. The multiple treats 16 can also have different sizes, for purposes of selectively dropping through different openings 14 in the pet chew product 10 with different sizes, as desired.

The pet chew product 10 may also be provided with a reload opening (not shown) that is larger than the treat 16 and permits a loading and re-loading of the cavity of the pet chew product 10 with the treats 16. The reload opening may be contoured, so as to permit an owner in operation to easily push the treats 16 into the cavity, but not easily permit the treats to drop back through the cavity from inside the pet chew product 10, for example. For example, the reload opening may be substantially frustoconical in shape, with an inner portion that is smaller than the outer portion, so as to militate against the treats 16 dropping through the reload opening after they have been pushed into the cavity 14. A skilled artisan may select suitably-sized openings and contours for loading and re-loading of the cavity 14, within the scope of the present disclosure.

It should also be understood that the treat 16 may be formed from a material that is suitable for providing a dental benefit to a dog. For example, the treat 16 may include abrasive surfaces adapted to interact with a dog's teeth, or include breath freshening agents adapted to impart a pleasing scent to a dog's mouth, for example. The treat 16 may be at least partially formed from silica, for example, compounded in an edible binder. Accordingly, the treat 16 may be formed from any suitable material for dog consumption that will not easily exit the pet chew product 10 during use thereof

As shown in FIGS. 1-6, both the first casing segment 20 and the second casing segment 30 may have the at least one opening 18. Each of the openings 18 may be selected to have a shape and size that will not allow one of the treats 16 disposed within the cavity 14 to fit therethrough, causing an dog playing with the pet chew product 10 to be able to see and smell the treat 16 without being able to free the treat 16 from the pet chew product 10 through the at least one opening 18. This causes the dog to have continued interest in the pet chew product 10 as the dog must access the cavity 14 before the dog can interact with the treat 16 disposed therein.

In an alternative embodiment, the first casing segment 20 and the second casing segment 30 have no openings 18, and are fully sealed so that the dog can only smell and hear the treat 16.

In a further embodiment, the at least one opening 18 is precut into the casing 12, for example, with a die. The at least one opening 18 may have a size and a shape that corresponds to a size and a shape of at least one of the treats 16 disposed inside of the cavity. It should be appreciated that, where the dog shakes or moves the pet chew product 10, only the correspondingly-shaped treats 16 may drop through the at least one opening 18. This will entice the dog to further interact with the pet chew product 10, leading to a more sustained enjoyment of the pet chew product 10 by the dog.

Another advantage of having the treat 16 disposed within the cavity 14 is that the relatively durable material forming the first casing segment 20 and the second casing segment 30 may cause the treat 16 to make a sound audible to a dog when the treat 16 strikes either the first casing segment 20 or the second casing segment 30.

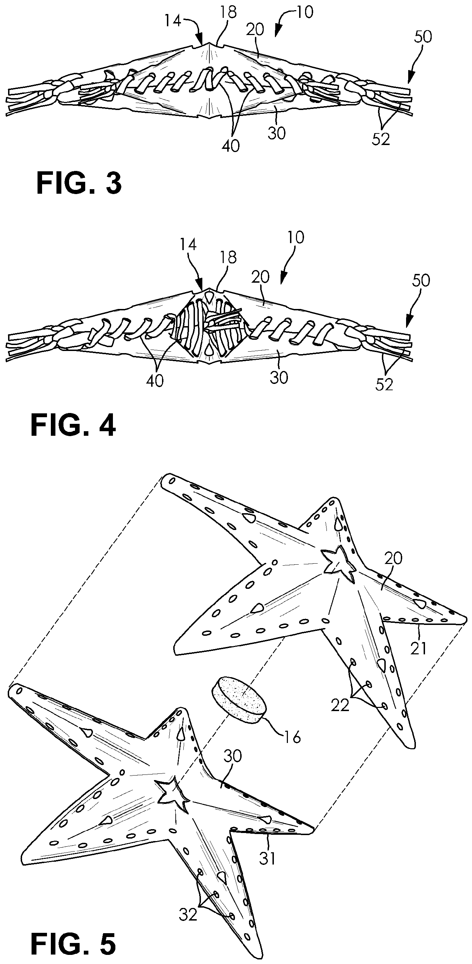

As shown in FIGS. 5 and 6, the treat 16 may have a size which permits it to fit within an open volume of the cavity 14, and to be moved within the volume of the cavity through manipulation of the pet chew product 10. For example, the treat 16 may be spaced apart a distance W1 from an inner surface 23, 33 of the cavity 14, and a distance W2 from an end of the cavity 14, when disposed within the pet chew product 10. The open volume in the cavity 14 thereby allows the treat 16 to move inside of the cavity 14, and impact the inner surface 23, 33, which results in an audible rattle as the pet chew product 10 is manipulated (e.g., shaken or moved) by the dog. Accordingly, a dog playing with the pet chew product 10 may be able to see and smell the treat 16 through the at least one opening 18, and also hear the treat 16 while it is enclosed within the cavity 14, causing the dog to continue interacting with the pet chew product 10 until the treat 16 has been removed.

The pet chew product 10 includes at least one tassel 50 extending therefrom. The at least one tassel 50 may be formed from one or more strands 52. The strands 52 may be thin elongated strips of an edible material, wherein the edible material may also have a suitable durability to withstand a desired amount of dog chewing or play without breaking or becoming separated from the remainder of the pet chew product 10. The strands 52 may be formed from one of the materials used to form at least one of the first casing segment 20, the second casing segment 30, and the laces 40. The strands 52 may be formed from a hide of an animal such as rawhide, as a non-limiting example.

The strands 52 may be attached to the remainder of the pet chew product 10 by feeding at least one of the strands 52 through one of the first apertures 22 or the second apertures 32 or through at least one of each of the first apertures 22 and the second apertures 32, as desired. The strands 52 extending from one region of the pet chew product 10 may then be tied together or otherwise coupled to each other to form the at least one tassel 50 extending from the pet chew product 10. Referring back to FIG. 1, the pet chew product 10 is shown as having five tassels 50 formed from two of the strands 52 extending through one of the first apertures 22 and one of the second apertures 32 adjacent each of the points of the star-shaped pet chew product 10. The four portions of the strands 52 extending from each point of the star-shaped pet chew product 10 are then tied together to form a single tassel 50 having four ends of the strands 52 forming the furthest extensions of the tassel 50. It should be understood that the at least one tassel 50 may be formed using one of the strands 52 or more than two of the strands 52, as desired. It should also be understood that the individual strands 52 may be joined to each other using any form of knot or any form of coupling means, as desired.

In some embodiments of the disclosure, the strands 52 may instead be formed from the laces 40 used to couple the first casing segment 20 to the second casing segment 30. For example, one of the laces 40 may be run through the first apertures 22 and the second apertures 32 along the perimeters 21, 31 of the casing segments 20, 30 between one of the points of the star-shaped pet chew product 10 to an adjacent one of the points. The single one of the laces 40 may then extend from each of the two adjacent points of the star-shaped pet chew product 10 where each end portion of the one of the laces 40 may potentially be tied to one or more adjacent laces 40 or a separately formed one of the strands 52 to form one of the tassels 50. Accordingly, the laces 40 may be used to couple the first casing segment 20 to the second casing segment 30 while also serving as at least a portion of each of the tassels 50.

The pet chew product 10 has been described herein as having a first casing segment 20 and a second casing segment 30. However, it should be understood that one casing segment or three or more casing segments may be used while remaining within the scope of the current disclosure. For example, the pet chew product 10 may be formed from a single casing segment that is folded upon itself and coupled together using one of the laces 40. Alternatively, the pet chew product 10 may be formed from three or more casing segments coupled to each other using the laces 40 along the seams formed between the casing segments. In all cases, however, the pet chew product 10 should be assembled to include at least one cavity 14 formed therein having a shape and size capable of retaining one of the treats 16 therein when the pet chew product 10 is first assembled.

In use, the pet chew product 10 may be interacted with by a dog in a variety of different ways. The pet chew product 10 may be thrown as part of a retrieval exercise to get the dog to chase or catch the pet chew product 10. The inclusion of the at least one tassel 50 may advantageously create an effect where the at least one tassel 50 trails the motion of the remainder of the pet chew product 10 to visually stimulate the dog chasing the airborne pet chew product 10. The at least one tassel 10 also advantageously adds a feature that the dog may easily catch when the pet chew product 10 is thrown.

Once the dog has access to the pet chew product 10, the dog may detect the presence of the treat 16 contained within the cavity 14. The dog may then proceed to try to access the treat 16 by separating the first casing segment 20 from the second casing segment 30 or by creating an opening in one of the first casing segment 20 and the second casing segment 30 large enough to allow the treat 16 to exit the cavity 14, such as by widening one of the openings 18 through chewing.

Likewise, the first casing segment 20, the second casing segment 30, the laces 40, and the tassels 50 are all formed from an edible material such as rawhide, allowing the dog to chew on or through any portion of the pet chew product 10 in an attempt to reach the treat 16. The dog may, for instance, chew through or remove one of the laces 40 from the pet chew product 10 to separate a portion of the first casing segment 20 from the second casing segment 30. The dog may repeat this process until the separation between the casing segments 20, 30 is great enough that the dog may access the treat 16.

Alternatively, the dog may merely chew through one of the first casing segment 20 or the second casing segment 30, or widen one of the openings 18 formed therein, to access the treat 16. The chewing of the pet chew product 10 to access the treat 16 satisfies the urges of the dog to chew, while the interaction of the dog's teeth with the pet chew product 10, and particularly the laces 40 and the tassels 50, may aid in cleaning the dog's teeth when using the pet chew product 10.

During the chewing of the pet chew product 10, the dog may find it particularly enjoyable to chew on the at least one tassel 50 coupled to the casing 12. The tassel 50 may include a plurality of thin strands 52 that extend outwardly from the casing 12. For example, the tassel 50 may be formed from thin strands 52 of edible material such as rawhide. The thin strands 52 may be the same as the laces 40, for example, extensions of the laces 40 that do not connect the casing segments 20, 30, but instead hang from the casing segments 20, 30. Alternatively, the thin strands 52 may be different from the laces 40, for example, they may be separate from the laces 40, and be tied and hang from portions of the casing 12. The thin strands 52 can also supplement the connecting of the casing segments 20, 30, by effectively acting as an additional set of laces 40. Other suitable materials, configurations, and locations for the tassels 50 may also be used, as desired.

It should be appreciated that the dog's interaction with the thin strands 52 forming the at least one tassel 50 may have a flossing effect. For example, due to the thin nature of the strands 52 relative to the remaining portions of the pet chew product 10, a dental benefit may be provided to the dog through an interaction of the strands 52 with the dog's teeth. Flossing action may also be provided by the laces 40 holding the two pieces together, for example, where the pet chew product 10 does not have the at least one tassel 50.

As described hereinabove, the treat 16 may have any number of flavors and may also be adapted to provide certain dental benefits. Upon eating the treat 16, the dog may continue to chew on the remainder of the pet chew product 10, as dogs are still attracted to edible materials such as rawhide even in the absence of the treat 16. The continued interest may be facilitated in instances where additional flavoring is added to the edible material forming the pet chew product 10.

The pet chew product 10 is shown in FIGS. 1-6 and described hereinabove as being substantially star-shaped. However, it should be understood that the pet chew product 10 may have a variety of shapes and sizes while remaining within the scope of the disclosure. For instance, referring now to FIGS. 7-10, the pet chew product may also be substantially circular, moon-shaped, donkey-shaped, or heart shaped, for example. In each case, the pet chew product 10 is shown as being formed from two or more of the casing segments 20, 30. However, as explained hereinabove the pet chew product 10 may be formed into any shape using any combination of casing segments 20, 30, including a single casing segment with edges, joined together.

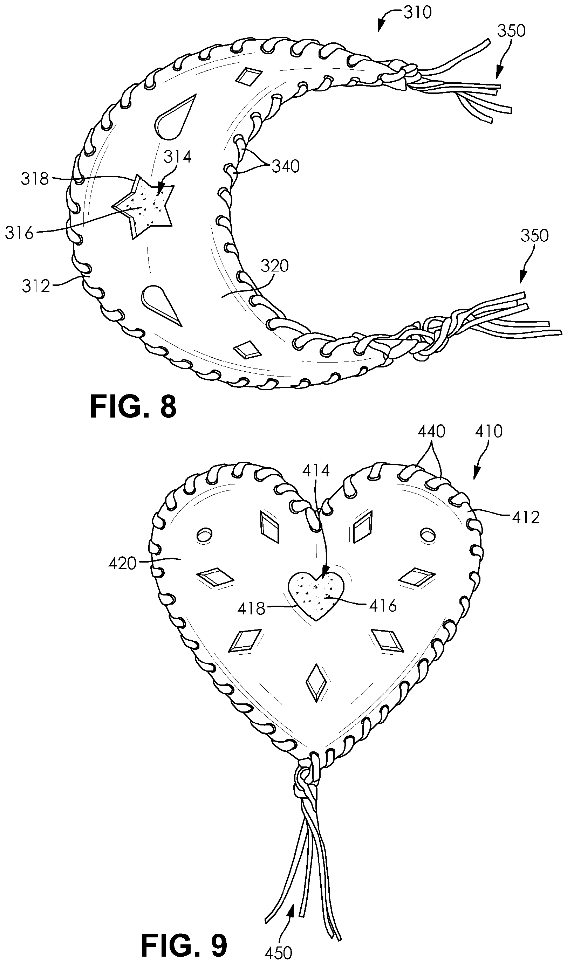

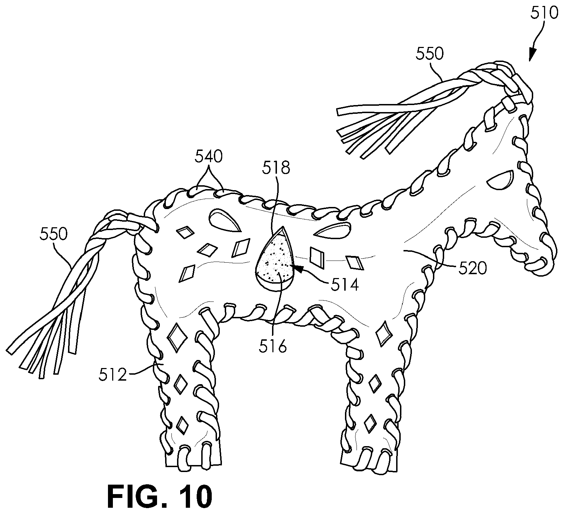

In FIGS. 7-10, like or related structure to that shown in FIGS. 1-6 is identified with the same reference number in a 200-series (FIG. 7), 300-series (FIG. 8), 400-series (FIG. 9), or 500-series (FIG. 10), for purposes of clarity.

FIG. 7 illustrates a pet chew product 210 having a substantially disk-like shape. The pet chew product 210 is formed from a circular first casing segment 220 and a circular second casing segment (not shown) coupled to each other using at least one lace 240. The pet chew product 210 includes a flattened substantially cylindrical cavity 214 and at least one opening 218 formed in one of the first casing segment 220 and the second casing segment. The pet may view and smell the inner treat 316 through the at least one opening 218. The pet chew product 210 may also include at least one tassel 250 extending therefrom. The at least one tassel 250 may include a multitude of tassels 250 spaced apart substantially equally around a circumference of the pet chew product 210. For example, the tassels 250 may extend from a periphery of the disk-shaped pet chew product 210 to cause the pet chew product 210 to have an appearance of a sun. The at least one tassel 250 may extend from the pet chew product 210 from a point adjacent the at least one lace 240, and formed along a seam between the first casing segment 220 and the second casing segment.

FIG. 8 illustrates a pet chew product 310 formed from a moon-shaped first casing segment 320 and a moon-shaped second casing segment (not shown). The first and second casing segments are coupled to each other using at least one lace 340. The pet chew product 310 includes a cavity 314 that is substantially moon-shaped and at least one opening 318 formed in one of the first casing segment 320 and the second casing segment. The pet may view and smell the treat 316 through the at least one opening 318. The pet chew product 310 may also include at least one tassel 350 extending therefrom. The at least one tassel 350 may extend from a periphery of the pet chew product 310. For instance, the pet chew product 310 may include one of the tassels 350 extending from each point of the crescent shaped moon.

FIG. 9 illustrates a pet chew product 410 formed from a heart-shaped first casing segment 420 and a heart-shaped second casing segment (not shown). The first and second casing segments are coupled to each other using at least one lace 440. The pet chew product 410 includes a cavity 414 that is substantially heart-shaped and at least one opening 418 formed in one of the first casing segment 420 and the second casing segment. The pet may view and smell the inner treat 416 through the at least one opening 418. The pet chew product 410 may include at least one tassel 450 extending therefrom. For instance, the at least one tassel 450 may extend from a point formed at one end of the pet chew product 410.

FIG. 10 illustrates a pet chew product 510 formed from a donkey-shaped first casing segment 520 and a donkey-shaped second casing segment (not shown). The first and second segments are coupled to each other using at least one lace 540. The pet chew product 510 includes a cavity 514 that is substantially donkey-shaped and at least one opening 518 formed in one of the first casing segment 520 and the second casing segment 530. The pet may view and smell the inner treat 516 through the at least one opening 518. The pet chew product 510 may also include at least one tassel 550 extending therefrom. For instance, the at least one tassel 550 may extend from a head area of the donkey-shape, in order to emulate a mane of a donkey, or from a tail area of the donkey shape, in order to emulate a tail of a donkey, as non-limiting examples.

A variety of shapes for the pet chew product 10, 110, 210, 410, 510 are disclosed hereinabove, for purposes of describing the invention. However, one of ordinary skill in the art should understand that other shapes for the pet chew product are also contemplated, and may be used within the scope of the present disclosure.

The pet chew product 10, 110, 210, 410, 510 of the present disclosure contains a treat and permits an auditory detection, an olfactory detection, and visual detection of the treat by a dog, for example. It has been surprisingly found that the pet chew product 10, 110, 210, 410, 510 provides many hours of stimulating play and enjoyment for dogs.

While certain representative embodiments and details have been shown for purposes of illustrating the invention, it will be apparent to those skilled in the art that various changes may be made without departing from the scope of the disclosure, which is further described in the following appended claims.

## Claims

1. A pet chew product (10) comprising:
an edible casing (12) having a hollow cavity (14) with an edible treat (16) disposed therein, the casing (12) having a first casing segment (20) and a second casing segment (30) and an opening (18) that militates against a removal of the edible treat (16) from the cavity (14) until the opening (18) or the casing (12) is opened further by a pet, the opening (18) permitting an olfactory detection and visual detection of the edible treat (16) by the pet;
wherein an open volume of the cavity (14) is greater than a size of the edible treat (16) and allows the edible treat (16) to strike an inner surface (23, 33) of the cavity (14) when the casing (12) is manipulated by the pet, the striking of the edible treat (16) with the inner surface (23, 33) of the cavity (14) permitting an audible detection of the edible treat (16) by the pet,
***characterised in that*** a peripheral edge of the first casing segment (20) is coupled to a peripheral edge of the second casing segment (30) with at least one lace (40), and the pet chew product further comprises at least one tassel (50), having a plurality of strands (52) extending outwardly from the casing (12).

2. The pet chew product according to Claim 1, wherein the first perimeter (21) and the second perimeter (31) are separate pieces and have substantially the same shape and size.

3. The pet chew product according to Claim 1 or 2, wherein the at least one lace (40) is formed from an animal hide.

4. The pet chew product according to Claim 1, wherein the at least one tassel (50) is formed from an animal hide.

5. The pet chew product according to Claim 1, wherein the treat (16) is formed from one of a non-powdery substance and a powdery substance.

6. The pet chew product according to Claim 1, wherein the treat (16) includes at least one of an abrasive component and a breath freshening component.

7. The pet chew product according to Claim 6, wherein the edible treat (16) includes silica.

8. A method of producing a pet chew product, the method comprising the steps of:
providing a first casing segment (20) and a second casing segment (30), each of the first casing segment (20) and the second casing segment (30) having a peripheral edge;
disposing an edible treat (16) between the first casing segment (20) and the second casing segment (30);
connecting the peripheral edges of the first casing segment (20) and the second casing segment (30) to form an edible casing (12) having a hollow cavity (14) with the edible treat (16) disposed therein, the casing (12) having an opening (18) that militates against a removal of the edible treat (16) from the cavity (14) until the opening (18) or the casing (12) is opened further by a pet, the opening (18) permitting an olfactory detection and visual detection of the edible treat (16) by the pet, wherein an open volume of the cavity (14) is greater than a size of the edible treat (16) and allows the edible treat (16) to strike an inner surface (23, 33) of the cavity (14) when the casing (12) is manipulated by the pet, the striking of the edible treat (16) with the inner surface (23, 33) of the cavity (14) permitting an audible detection of the edible treat (16) by the pet; ***characterised in that*** the step of connecting the peripheral edges of the first casing segment (20) and the second casing segment (30) includes lacing together the peripheral edges with at least one lace (40), and the method further comprises attaching at least one tassel (50) to the casing, having a plurality of strands (52) extending outwardly from the casing (12).

9. The method according to Claim 8, including the step of pre-cutting the opening (18) in one of the first casing segment (20) and the second casing segment (30) prior to the step of connecting the peripheral edges of the first casing segment (20) and the second casing segment (30).

## Patentansprüche

1. Haustierkauprodukt (10), das Folgendes umfasst:
eine essbare Hülle (12), die einen hohlen Hohlraum (14) mit einem essbaren Leckerbissen (16) aufweist, der darin angeordnet ist, wobei die Hülle (12) ein erstes Hüllensegment (20) und ein zweites Hüllensegment (30) und eine Öffnung (18) aufweist, die einer Entnahme des essbaren Leckerbissens (16) aus dem Hohlraum (14) entgegenwirkt, bis die Öffnung (18) oder die Hülle (12) durch ein Haustier weiter geöffnet wird, wobei die Öffnung (18) eine Geruchswahrnehmung und visuelle Wahrnehmung des essbaren Leckerbissens (16) durch das Haustier ermöglicht;
wobei ein offener Rauminhalt des Hohlraums (14) größer ist als eine Größe des essbaren Leckerbissens (16) und es dem essbaren Leckerbissen (16) ermöglicht, gegen eine innere Fläche (23, 33) des Hohlraums (14) zu stoßen, wenn die Hülle (12) durch das Haustier betätigt wird, wobei das Stoßen des essbaren Leckerbissens (16) gegen die innere Fläche (23, 33) des Hohlraums (14) eine auditive Wahrnehmung des essbaren Leckerbissens (16) durch das Haustier ermöglicht, ***dadurch gekennzeichnet, dass*** ein umlaufender Rand des ersten Hüllensegments (20) mit mindestens einer Schnur (40) an einen umlaufenden Rand des zweiten Hüllensegments (30) gekoppelt ist und das Haustierkauprodukt ferner mindestens einen Quast (50) umfasst, der mehrere Stränge (52) aufweist, die sich von der Hülle (12) nach außen erstrecken.

2. Haustierkauprodukt nach Anspruch 1, wobei der erste Umfang (21) und der zweite Umfang (31) getrennte Teile sind und im Wesentlichen die gleiche Form und Größe aufweisen.

3. Haustierkauprodukt nach Anspruch 1 oder 2, wobei die mindestens eine Schnur (40) aus einer Tierhaut gebildet ist.

4. Haustierkauprodukt nach Anspruch 1, wobei der mindestens eine Quast (50) aus einer Tierhaut gebildet ist.

5. Haustierkauprodukt nach Anspruch 1, wobei der Leckerbissen (16) aus einem von einem nicht pulverförmigen Stoff und einem pulverförmigen Stoff gebildet ist.

6. Haustierkauprodukt nach Anspruch 1, wobei der Leckerbissen (16) mindestens eines von einem scheuernden Bestandteil und einem atemerfrischenden Bestandteil umfasst.

7. Haustierkauprodukt nach Anspruch 6, wobei der essbare Leckerbissen (16) Siliciumdioxid umfasst.

8. Verfahren zur Herstellung eines Haustierkauprodukts, wobei das Verfahren die folgenden Schritte umfasst:
Bereitstellen eines ersten Hüllensegments (20) und eines zweiten Hüllensegments (30), wobei jedes von dem ersten Hüllensegment (20) und dem zweiten Hüllensegment (30) einen umlaufenden Rand aufweist;
Anordnen des essbaren Leckerbissens (16) zwischen dem ersten Hüllensegment (20) und dem zweiten Hüllensegment (30);
Verbinden der umlaufenden Ränder des ersten Hüllensegments (20) und des zweiten Hüllensegments (30) zum Bilden einer essbaren Hülle (12), die einen hohlen Hohlraum (14) mit dem darin angeordneten essbaren Leckerbissen (16) aufweist, wobei die Hülle (12) eine Öffnung (18) aufweist, die der Entnahme des essbaren Leckerbissens (16) aus dem Hohlraum (14) entgegenwirkt, bis die Öffnung (18) oder die Hülle (12) durch ein Haustier weiter geöffnet wird, wobei die Öffnung (18) eine Geruchswahrnehmung und eine visuelle Wahrnehmung des essbaren Leckerbissens (16) durch das Haustier ermöglicht, wobei ein offener Rauminhalt des Hohlraums (14) größer ist als eine Größe des essbaren Leckerbissens (16) und das Stoßen des essbaren Leckerbissens (16) an eine innere Fläche (23, 33) des Hohlraums (14) ermöglicht, wenn die Hülle (12) durch das Haustier betätigt wird, wobei das Stoßen des essbaren Leckerbissens (16) gegen die innere Fläche (23, 33) des Hohlraums (14) eine auditive Wahrnehmung des essbaren Leckerbissens (16) durch das Haustier ermöglicht; ***dadurch gekennzeichnet, dass*** der Schritt zum Verbinden der umlaufenden Ränder des ersten Hüllensegments (20) und des zweiten Hüllensegments (30) das Zusammenschnüren der umlaufenden Ränder mit mindestens einer Schnur (40) umfasst und das Verfahren ferner das Anbringen von mindestens einem Quast (50), der mehrere Stränge (52) aufweist, die sich von der Hülle (12) nach außen erstrecken, an der Hülle aufweist.

9. Verfahren nach Anspruch 8, das den Schritt zum Vorschneiden der Öffnung (18) in einem von dem ersten Hüllensegment (20) und dem zweiten Hüllensegment (30) vor dem Schritt zum Verbinden der umlaufenden Ränder des ersten Hüllensegments (20) und des zweiten Hüllensegments (30) umfasst.

## Revendications

1. Un article à mâcher pour animaux domestiques (10) comprenant :
une enveloppe comestible (12) présentant une cavité creuse (14) remplie d'une gourmandise comestible (16), l'enveloppe (12) présentant un premier segment d'enveloppe (20) et un deuxième segment d'enveloppe (30), et une ouverture (18) s'opposant à l'extraction de la gourmandise comestible (16) hors de la cavité (14) jusqu'à ce que l'ouverture (18) ou l'enveloppe (12) soit ouverte davantage par un animal domestique, l'ouverture (18) permettant une détection olfactive et une détection visuelle de la gourmandise comestible (16) par l'animal domestique ; un volume ouvert de la cavité (14) étant supérieur à la taille de la gourmandise comestible (16), et permettant à la gourmandise comestible (16) de heurter une surface interne (23, 33) de la cavité (14) lors de la manipulation de l'enveloppe (12) par l'animal domestique, le contact de la gourmandise comestible (16) avec la surface interne (23, 33) de la cavité (14) permettant une détection audible de la gourmandise comestible (16) par l'animal domestique,
***caractérisé en ce que***
un bord périphérique du premier segment (20) de l'enveloppe est couplé à un bord périphérique du deuxième segment d'enveloppe (30) à l'aide d'au moins un lacet (40), et l'article à mâcher pour animaux domestiques (10) comprenant au moins un pompon (50) doté d'une série de brins (52) s'étendant de l'enveloppe comestible (12) vers l'extérieur.

2. Article à mâcher pour animaux domestiques selon la revendication 1, le premier pourtour (21) et le deuxième pourtour (31) étant des pièces distinctes, dont la forme et les dimensions sont substantiellement similaires.

3. Article à mâcher pour animaux domestiques selon la revendication 1 ou 2, l'au moins un lacet (40) étant réalisé en peau d'animal.

4. Article à mâcher pour animaux domestiques selon la revendication 1, l'au moins un pompon (50) étant réalisé en peau d'animal.

5. Article à mâcher pour animaux domestiques selon la revendication 1, la gourmandise (16) étant composée d'une substance non poudreuse et d'une substance poudreuse.

6. Article à mâcher pour animaux domestiques selon la revendication 1, la gourmandise (16) comprenant au moins un composant abrasif et un composant rafraîchisseur d'haleine.

7. Article à mâcher pour animaux domestiques selon la revendication 6, la gourmandise comestible (16) comprenant de la silice.

8. Méthode de production d'un article à mâcher pour animaux domestiques, la méthode comprenant les étapes suivantes
fourniture d'un premier segment d'enveloppe (20) et d'un deuxième segment d'enveloppe (30), chacun des premier segment d'enveloppe (20) et deuxième segment d'enveloppe (30) présentant un bord périphérique ;
placement d'une gourmandise comestible (16) entre le premier segment d'enveloppe (20) et le deuxième segment d'enveloppe (30) ;
raccordement des bords périphériques du premier segment d'enveloppe (20) et du deuxième segment d'enveloppe (30) pour constituer une enveloppe comestible (12) présentant une cavité creuse (14) remplie d'une gourmandise comestible (16), l'enveloppe (12) présentant une ouverture (18) s'opposant à l'extraction de la gourmandise comestible (16) hors de la cavité (14) jusqu'à ce que l'ouverture (18) ou l'enveloppe (12) soit ouverte davantage par un animal domestique, l'ouverture (18) permettant une détection olfactive et une détection visuelle de la gourmandise comestible (16) par l'animal domestique, un volume ouvert de la cavité (14) étant supérieur à la taille de la gourmandise comestible (16), et permettant à la gourmandise comestible (16) de venir heurter une surface interne (23, 33) de la cavité (14) lors de la manipulation de l'enveloppe (12) par l'animal domestique, le contact de la gourmandise comestible (16) avec la surface interne (23, 33) de la cavité (14) permettant une détection audible de la gourmandise comestible (16) par l'animal domestique,
***caractérisée en ce que***
l'étape de raccordement des bords périphériques du premier segment (20) et du deuxième segment d'enveloppe (30) comprenant le laçage l'un à l'autre des bords périphériques à l'aide d'au moins un lacet (40), et la méthode comprenant en outre la fixation d'au moins un pompon (50) doté d'une série de brins (52) s'étendant de l'enveloppe comestible (12) vers l'extérieur.

9. Méthode selon la revendication 8, comprenant le pré-découpage de l'ouverture (18) dans un des segments que sont le premier segment d'enveloppe (20) et le deuxième segment (30), préalablement à l'étape de raccordement des bords périphériques du premier segment d'enveloppe (20) et du deuxième segment d'enveloppe (30).
